# EUROPÄISCHE PATENTSCHRIFT

(11) **EP 1 010 680 B1**
(45) Veröffentlichungstag und Bekanntmachung des Hinweises auf die Patenterteilung: **15.03.2006**
(21) Anmeldenummer: 98890363.9
(22) Anmeldetag: 07.12.1998
(51) Int. Cl.: C05F 17/02, C05F 17/00

(54) **Kompostierungssystem**
Composting system
Système de compostage

(43) Veröffentlichungstag der Anmeldung: 21.06.2000
(73) Patentinhaber: M-U-T MASCHINEN-UMWELTTECHNIK- TRANSPORTANLAGEN GESELLSCHAFT M.B.H., A-2000 Stockerau (AT)
(72) Erfinder: Harrer, Ewald, Dipl.-Ing., 2000 Stockerau (AT)
(74) Vertreter: Müllner, Erwin

(56) Entgegenhaltungen:
- EP-A- 0 831 078
- WO-A-95/13254
- DE-A- 2 057 413
- PATENT ABSTRACTS OF JAPAN vol. 95, no. 3, 28. April 1995 & JP 06 345575 A (MASARU HASAKA), 20. Dezember 1994

## Beschreibung

Die Erfindung betrifft ein Kompostierungssystem mit offenen oder geschlossenen Rotte-Lagerpositionen, wie beispielsweise Rotte-Behältern, mit Messstellen für Temperatur, Feuchte, Partialdruck und Mengen von Luft im Abluftbereich, einer Belüftungs- und Absaugeinrichtung, wie z.B. einem Sauggebläse zum Durchsaugen von Prozessrohluft durch das Rottegut, sowie mit einer Regelung des Prozessablaufes auf Grund von Messgrößen.

Die *DE 35 13 852 A1* betrifft das Rotten von organischen Abfällen mithilfe eines Impfsubstrates, gegebenenfalls mit Sauerstoffspender, in Behältern, wobei die nicht konditionierte jeweils vorhandene Umgebungsluft durch die unter einem Flugdach stehenden Behälter gesaugt wird. Die Belüftung wird gemeinsam gesteuert; dazu sind Temperatur-Messsonden in der Abluftleitüng vorgesehen. Es erfolgt ein Umfüllen nach 14 Tagen zum Zwecke der Nachrotte.

Aus der *EP 0 458 136 B1* ist ein Verfahren zur Kompostierung von Abfällen bekannt, bei dem das Rottegut in einem Behälter eingebracht und unter Luftzuführung mikrobiologisch abgebaut wird. Dabei wird die aus dem Rottegut austretende Prozessabluft dem Rottegut erneut zugeführt bzw. der Frischluft zugesetzt. Die Rückführung und Einleitung erfolgt zur Hygienisierung des Rottegutes bei abklingender mikrobiologischer Aktivität in der Rotte. Bei einer solchen fermentativen Hydrolyse wird gemäß der *EP 0 322 424 B1* ein geschlossener unter Druck stehender Behälter als so genannte Rottebox eingesetzt. Die mit Wärme und Feuchtigkeit beladene Prozessabluft wird gekühlt, sodass die Feuchtigkeit in Form eines Kondensats auskondensiert. Ein Wärmetauscher gibt die Wärme an die Zuluft ab. Die Abluft kann mit Umgebungstemperatur und ohne Feuchtigkeit in die Atmosphäre abgeleitet werden. Das Kondensat kann als Wasserbad für die gekühlte und getrocknete Abluft verwendet werden.

Ein Kompostierungsverfahren nach der *DE 36 37 393 C2* für Hausmüll oder hausmüllähnlichen Abfall arbeitet mit einer dem mikrobiologischen Wachstum angepassten Luftzufuhr zu dem ohne Bewegung in offenen kanalähnlichen Behältern gelagerten Abfall. In dem Abfall werden zunächst die Zellflüssigkeiten abgebaut. Sobald dieser Zustand erreicht ist, wird die Kompostierung durch Trocknung zum Stillstand gebracht. Bei diesem Verfahren wird das Gewicht des Rottegutes zur Feststellung ihres Zustandes wiederholt gemessen. Es geht als Führungsgröße in die elektronische Regelung ein. Dabei kann reiner Sauerstoff der rückgeführten Abluft zugesetzt werden. Eine Trocknung der kompostierten Rotte kann unter Vakuum erfolgen.

Aus der WO 95 13254 A ist ein Verfahren und eine Vorrichtung zur biologischen Behandlung, insbesondere Kompostierung biogener und abiogener Stoffe und/oder Stoffgemenge in einer Miete in Gegenwart von Mikroorganismen, in einem geschlossenen Reaktor mit mehreren Reaktorzonen, nämlich der Miete selbst und wenigstens einem an die Miete angrenzenden Reaktorgasraum, bekannt. Dabei werden verfahrensmäßig Milieuzustände und Milieuzustandsänderungen mittels eines stationären, quasi-stationären und/oder instationären Betriebes des Reaktors reguliert. Die Vorrichtung weist hierzu einen geschlossenen Reaktor mit bestimmten Reaktorzonen auf. Durch die Einstellung der Milieuzustände wird versucht das Gasraumklima auf das Feststoffgemenge zu übertragen. Einstellbare Strömungsvarianten in den Reaktorzonen ober- und unterhalb der Miete beeinflussen die Milieuzustände an den Grenzflächen der Miete. Als Reguliermittel dient einerseits die Einstellmöglichkeit verschiedener Gasströmungsarten und andererseits die Kombination von wenigstens zwei unterschiedlichen Gasströmungsarten. Weiters ist während der Behandlung die Gasströmungsrichtung umkehrbar. Als Regelgröße zur Einstellung eines bestimmten Milieuzustandes wird die Temperatur der Reaktorluft oder der Miete herangezogen. Die Ausgangswerte der Messeinrichtungen werden dabei mit den Sollwertgebern verglichen und die festgestellte Regelabweichung vom vorgewählten Sollwert durch ein oder mehrere Regler ausgeglichen. Bevorzugte Belüftungsart ist ein geschlossenes Umluftsystem mit oder ohne Frischlufteinspeisung. Durch eine wahlweise Einstellung der Strömungsvarianten über das Umluftsystem werden definierte Milieuzustände hergestellt. Die Frischlufteinspeisung dient primär zur Einstellung des Sauerstoffgehaltes. Die Prozessabluft wird der Umluft zugeführt. Überschussluft wird über Biofilter abgegeben.

Eine Kompostierungsvorrichtung nach der EP 0831 078 A2 besteht aus einer Vielzahl von Containern zur Aufnahme und Behandlung von Abfällen organischen Ursprungs. Jeder Container erhält die Zuluft über ein Verteilrohrsystem und ist gleichzeitig zur Abführung der Abluft an ein Abzugsrohrsystem angeschlossen. Die Zuluft wird durch ein regulierbares Gebläse eingeblasen. Über die gemessene Druckdifferenz zwischen Zuluft- und Abluftrohrsystem wird die Geschwindigkeit des Gebläses gesteuert. Über ein bzw. mehrere Regelventile kann die Lüftströmungsrichtung im Container bzw. den Containern umgekehrt werden. Die Betriebskontrolle der Regelventile erfolgt über eine Temperaturmessung in zumindest einem der Container. Der Betrieb der Regelventile wird über einen einzelnen Rechner überwacht. Für die Abluftkühlung sind zwei Wärmetauscher im Abluftverteilrohrsystem vorhanden. Abgetrennte Kondensate des ersten Wärmetauschers werden über Beregnungsleitungen in die Container zurückgepumpt.

Die DE 20 57 413 A betrifft das Rotten von Hausmüll in einer wärmeisolierten Kompostierungszelle. Temperaturmessgeräte, ausgebildet als elektrische Widerstandsthermometer, sind im Innern der Zelle untergebracht. Über Heizelemente kann die Zuluft erwärmt werden. Die Drehrichtung des Ventilators ist umkehrbar eingerichtet, um die Luft entweder durch das zu kompostierende Material zu drücken oder zu saugen. Weiters besteht die Möglichkeit die Luft im Kreislauf zu führen. Zum Entleeren der Zelle ist der Verschlussdeckel abhebbar ausgestaltet.

Ausgehend von diesem Stand der Technik zielt die Erfindung darauf ab, ein praxisgerechtes, sich stets auf optimale Verfahrensleistung einstellendes, kompaktes und umweltfreundliches Kompostierungssystem anzugeben. Dies wird dadurch erreicht, dass das Rottegut in den Lagerpositionen bzw. Behältern mit konditionierter Prozessrohluft als Zuluft beaufschlagt ist, wobei die Temperatur und allenfalls die Feuchte, der Partialdruck und die Menge der Prozessroh-Luft einstellbar sind, dass zusätzlich zu den Messstellen im Abluftbereich auch im Zuluftbereich Messstellen angeordnet und diese Messstellen zur Ermittlung des Wärmestromes sowohl im Zuluft- als auch im Abluftbereich für die Messung von Temperatur, Feuchte, Druck, allenfalls Partialdruck und zumindest an einer Messstelle für die Menge der die Lagerposition bzw. den Behälter durchsetzenden Luft ausgelegt und an einen Rechner eines von der im aeroben Abbauprozess (Rotte) freigesetzten Reaktionswärme geführten Prozessreglers angeschlossen sind, der die Wärmetönung der Rotte während des Prozessablaufs pro Zeiteinheit aus den Wärmeströmen im Zuluft- und Abluftbereich ermittelt und abhängig von einer festgestellten Zunahme oder Abnahme der Wärmetönung daraus unter Einhaltung einer dem aktuellen Prozessstadium jeweils vorzugebenden Temperatur, z.B. 42°C, sowie Wasserdampfsättigung, z.B. wasserdampfgesättigt, bei vorgegebenen Druckverhältnissen, die Saugleistung im:Abluftbereich einer jeden Lagerposition bzw. Behälters, beispielsweise durch intermittierendes Öffnen und Schließen einer jeweils zugeordneten Luftklappe, steuert und zur Einhaltung einer vorgegebenen Substratfeuchte eine Nachfeuchtung des Rottegutes für jede Lageposition bzw. Behälter ermittelt und vorzugsweise, dass die Prozessregelung zur Sicherstellung vollständiger aerober Abbauvorgänge und zur Minimierung der Abluftbelastung die Ausgangsgrößen der Abluft, nämlich Feuchte und Temperatur an die Nennwerte der Betriebsgrößen nachgeschalteter Filter, insbesondere Biofilter, anpasst.

Durch die Erfassung der Temperatur, der Luftfeuchte, des Partialdruckes und der Luftmengen sowohl im Zuluft- als auch im Abluftbereich lässt sich der zugeführte und der abgeführte Wärmestrom ermitteln und aus der Differenz die Wärmetönung der Rotte während des Kompostierungsprozesses bestimmen. Somit.wird der Energiehaushalt, also die Prozessleistung bzw. der aktuelle Leistungszustand der Microorganismen lückenlos überwacht und für eine dem Fortgang des Abbauprozesses förderliche Temperatur die durchgesaugte Luftmenge pro Zeiteinheit in Abhängigkeit von der Zunahme oder Abnahme der festgestellten Wärmetönung geregelt. Dies kann durch Leistungsanpassung des Sauggebläses, z.B. über die Drehzahl erfolgen, durch Drosselklappen oder durch intermittierendes Schließen und Öffnen einer Klappe. Der besondere Effekt liegt in der individuellen, exakten und prozessgerechten Steuerung des Durchsaugens in Abhängigkeit von der im aeroben Abbauprozess freigesetzten Reaktionswärme, die über die Wärmetönung als Prozessleistung aus der Differenzmessung der Wärmeströme ermittelt wird, wobei sich die Klimatisierung der Halle, also die Aufrechterhaltung weitgehend gleich bleibender Luftqualität für die Beschäftigten sehr angenehm auswirkt. Dieses Kompostierungssystem führt zu einem optimalen Prozessablauf, der eine Verringerung des Bestandes der organischen Substanz innerhalb kürzest möglicher Zeit bewirkt. Die Abbauleistung (Abbaumenge pro Zeiteinheit) wird wesentlich verbessert. Das maßgebende Kriterium für die erfolgreiche Prozessführung wird auf einfache Weise erfasst, sodass ein Eingreifen durch Personal zur Aufrechterhaltung des Verrottungsablaufes nicht erforderlich ist. Der Luftmengenbedarf pro Zeiteinheit für die Aufrechterhaltung bzw. Einstellung zweckmäßiger Verfahrensparameter - wo im Falle einer Intensivrotte (z.B. 42°C wassefdampfgesättigt) oder bei einer Nachrotte (z.B. 34°C wasserdampfgesättigt) oder etwa auch für eine Trocknung (z.B. 50°C, 70% relative Luftfeuchte) - wird empirisch festgestellt und die Regelung des Luftstromes bzw. des Luftdurchsatzes, erfolgt über diese Kurve, bzw. Kurvenschar, im Prozessrechner, wobei der Luftstrom überschüssige Wärmemengen abtransportiert. Das Regelsystem tastet sich an den Optimalzustand für den größtmöglichen Abbau der biogenen Rückstände (Biomüll) bei geringstmöglichem Zeitaufwand durch Vergrößerung oder Verkleinerung der durchgesaugten Luftmenge in Abhängigkeit von einer festgestellten Zunahme oder von einem Rückgang der Prozessleistung heran.

Die Abluft aus dem Kompostierungsprozess kann so eingestellt werden, dass sich optimale Voraussetzungen, also angepasste Eingangswerte für die Nachbehandlung in Biofiltern ergeben.

Es ist zweckmäßig, wenn ein Luftbefeuchter z.B. in einer Klimaanlage zur Erhöhung der Luftfeuchte der Prozessrohluft im Zuluftbereich des Rotteguters bzw. der Rottebehälter, unabhängig von einer allfälligen Befeuchtungseinrichtung des Rottegutes selbst, vorgesehen ist. Durch Vorbefeuchtung der zugeführten Prozessrohluft sind die durch prozessbedingte Zustandsänderung auftretenden Druckverluste im Belüftungssystem niedrig und gestatten damit eine ökonomische Gestaltung des Sauggebläses.

Aus dem Mollier-Diagramm folgen Druckdifferenzen, für die ein Sauggebläse im Abluftbereich ausgelegt sein muss. Durch Erhöhung der Luftfeuchte der Prozessrohluft, also eingangsseitig, ergibt sich eine betriebswirtschaftliche, vorteilhafte Dimensionierung des Sauggebläses, sodass der Einsatz von leistungsstärkeren Drehkolbengebläsen, die den Einbau von Sicherheitsventilen erfordern, nicht notwendig ist. Unabhängig von der Konditionierung der Prozessrohluft, insbesondere hinsichtlich ihrer Temperatur und der Feuchtigkeit, ist es zweckmäßig, wenn zur Befeuchtung des Rottegutes selbst im Bereich der Rotte-Lagerpositionen, insbesondere in den Rotte-Behältern, über dem Rottegut Benetzungseinrichtungen, wie etwa Berieselungsanlagen, vorgesehen sind, deren Steuerventile an die Prozessregelung angeschlossen sind. Die Feuchtigkeit der Rotte ist für den Ablauf des Kompostierungsprozesses wesentlich. Ein Nachfeuchten kann den Wärmehaushalt der mikrobiologischen Abläufe beeinflussen und wird über die Regelung aktiviert.

Ein konkretes, besonders zweckmäßiges Ausführungsbeispiel ist dadurch gekennzeichnet, dass die als Rotte-Lagerpositionen vorgesehenen, insbesondere zum Be- und Entladen ortsveränderlichen Rotte-Behälter in einem die Prozessrohluft enthaltenden klimatisierten Raum, z.B. einer Halle, mit regelbarer Lufttemperatur, Luftfeuchte und Luftdruck vorgesehen sind und die Rotte-Behälter, gegebenenfalls lösbar an die Absaugeinrichtung angeschlossen sind, wobei der Rechner den Luftdurchsatz jedes Rotte-Behälters individuell und dem Prozessverlauf im angeschlossenen Rotte-Behälter folgend, steuert und dass die Benetzungseinrichtungen zur Nachfeuchtung der Rotte individuell zuschaltbar sind. Es wird also die Luft, beispielsweise in einer Halle, so konditioniert, dass sie als Prozessrohluft für eine Vielzahl von Rotte-Behältern zur Verfügung steht. Von dieser gemeinsamen Basis ausgehend, erfolgt jeweils eine genaue Anpassung an den Prozessablauf in jedem Rotte-Behälter durch die regelbare Saugleistung der durch die Behälter-Rotte durchgesaugten Prozessluft. Ferner ist die Feuchte des Rottegutes selbst individuell einstellbar. Um eine so genannte Rindenbildung im Rottekörper zu vermeiden, also die Ausbildung einer Oberschicht, die mangels vollständiger Einbindung in das Abbauverfahren bloß Ansätze einer Verrottung zeigt, ist es zweckmäßig, wenn bei geschlossenen Rotte-Behältern die Durchsatzrichtung bzw. Durchströmrichtung der Prozessrohluft durch den Rottekörper umkehrbar ist und wenn die Umkehrung in Phasen erfolgt.

Die Anordnung der Kompostierung in einer Halle wird in zweckmäßiger Weise so getroffen, dass die Absaugeinrichtung ein zentrales Gebläse, gegebenenfalls ein Drehkolbengebläse, mit Absaugleitungen umfasst, die im klimatisierten Raum in den Reaktionspositionen bzw. Kompostierungspositionen der Rotte-Behälter zum Anschluss an diese enden. Die Absaugleitung bzw. -kanäle können im Boden des Raumes, insbesondere der Halle, geführt werden, in der die Rotte-Behälter in vorbestimmten Positionen während der Kompostierung ihres Inhaltes stehen. Dabei sind sie beispielsweise selbsttätig mit der Absaugleitung verbunden. Diese Verbindung wird etwa durch einen Stutzen mit Ventil erreicht, das bei Vorhandensein eines Rotte-Behälters öffnet bzw. dann, wenn der Rotte-Behälter aus der Kompostierungsposition in die Lade- und bzw. oder Entladeposition innerhalb oder außerhalb der Halle verfahren wird, dicht schließt. Um die Prozesswärme rückzugewinnen ist es zweckmäßig, wenn in den Absaugleitungen, insbesondere in der aus allen Rottechargen zusammengeführte Leitung, Wärmetauscher zur Abgabe der Prozesswärme, vorzugsweise an eine Wärmepumpe, vorgesehen sind. Wie bekannt, kann damit die Prozessrohluft erwärmt bzw. die Halle bedarfsgerecht klimatisiert werden. Die Wärmepumpe ermöglicht es, höhere Temperaturen zur Verfügung zu stellen, wie sie etwa im Fernwärmebereich oder bei der Erzeugung von Warmwasser benötigt werden. Sowohl zum Zwecke der Rückführung als auch für die Abgabe an die Umgebung kann es zweckmäßig sein, wenn eine Kühlung erfolgt und wenn in der Prozessabluftleitung zur Kühlung ein Anschluss zur Einspeisung von Frischluft vorgesehen ist. Eine besondere Ausführung der Klimaanlage ist dadurch gekennzeichnet, dass der Rohluft für den Rotteprozess einen Wäscher für Frischluft zu deren Zustandsänderung, z.B. Abkühlung und Sättigung und sodann eine Heizeinrichtung zur allfälligen Erwärmung der feuchten Luft, insbesondere durch den Kondensator einer von den Abluft-Saugleitungen beaufschlagten Wärmepumpe, umfasst. Ein zentraler Abluftwäscher kann, insbesondere bei Kühlung der Prozessabluft durch Frischluft in der Saugleitung, bzw. nach dem Sauggebläse vorgesehen sein. Damit wird eine Sicherstellung der Luftfeuchte der Filterrohluft für nachfolgende Biofilter und bzw. oder zur Vorfilterung erreicht.

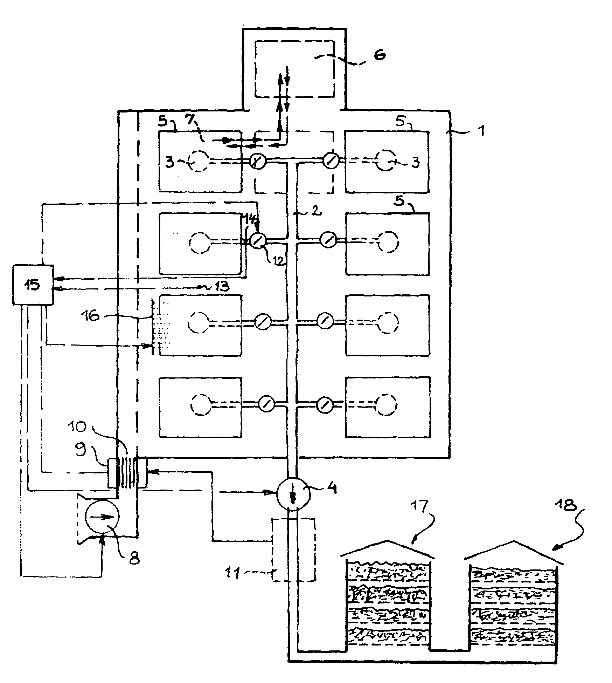

Ein Ausführungsbeispiel ist in der Zeichnung schematisch dargestellt.

In einer Halle 1 sind im Fußboden Luftführungskanäle als Absaugleitungen 2 vorgesehen, die von Anschlussstellen 3 zu einem Sauggebläse 4 führen. Über den Anschlussstellen 3 sind jeweils Rotte-Behälter 5 dargestellt, die aus einer strichliert dargestellten Position 6 nach dem Beladen in die Kompostierungsposition 7 und wieder zurück in die Position 6 zum Entladen nach Beendigung der Kompostierung verfahrbar sind. Die Rotte-Behälter 5 können selbstfahrend sein bzw. über ein Fördersystem in der Halle 1 längs- und querverschoben werden.

Die Halle 1 selbst wird über ein Gebläse 8 mit Frischluft versorgt, die über Wärmetauscher 9 beheizt und bzw. oder über eine Klimaanlage 10 temperiert, insbesondere gekühlt und auf die betriebswirtschaftlich günstigere Luftfeuchtigkeit gebracht werden kann. Der Wärmetauscher 9 nutzt die in der Abluft enthaltene Prozesswärme, wie dies durch den Wärmetauscher 11 dargestellt ist. Auch eine Rückführung der Abluft und eine Beimischung derselben zur Prozessrohluft ist möglich.

Die entsprechend klimatisierte bzw. konditionierte Prozessrohluft gelangt in die Halle 1 und erfüllt diese zur Gänze. Die Rotte-Behälter 5 sind so aufgebaut, dass sie die Prozessrohluft aus der Halle 1 ansaugen können, wobei die entweder dadurch erfolgt, dass die Behälter 5 oben offen sind oder dass entsprechende Schlitze in Wand und Decke vorgesehen sind, die bedarfsgerecht geöffnet oder geschlossen werden können. Die Rotte-Behälter 5 verfügen ferner noch im Bodenbereich über einen Anschluss, der mit seiner zugeordneten Anschlussstelle 3 im Hallenboden fluchtet. Auf bekannte Weise wird eine dichte Verbindung hergestellt, sobald der Rotte-Behälter 5 seine Kompostierungsposition einnimmt.

Das Sauggebläse 4 saugt nun die Prozessrohluft durch die im Rotte-Behälter 5 bzw. in den Rotte-Behältern befindliche Rottegut, wobei der Luftdurchsatz für jeden Rotte-Behälter individuelle durch ein Regelorgan, wie beispielsweise eine Klappe 12, einstellbar ist.

Mindestens eine Messstelle 13 für Temperatur, Luftfeuchte, Luftmenge und Luftdruck ist in der Halle 1 für die Prozessrohluft vorgesehen. Ebenso werden diese Parameter im Abluftbereich eines jeden Rotte-Behälters 5 an jeweils mindestens einer Messstelle 14 gemessen. Die Daten gelangen an einem Rechner 15, der die Wärmetönung des jeweiligen Kompostierungsprozesses in den einzelnen Rotte-Behältern fortwährend aus der Differenz der wärmeströme ermittelt und die Belüftungsintensität bzw. die Prozesskühlung zwecks Einhaltung günstiger Bedingungen, insbesondere Prozesstemperaturen in der Rotte und günstiger Prozessrohluftzustände, regelt. Dies ist durch die Steuerleitung zur jeweiligen Klappe 12 und zu dem Frischluftgebläse 8 sowie das Sauggebläse 4 angedeutet. Für die Einhaltung der erforderlichen Feuchte in der Rotte ist jedem Rotte-Behälter 5 eine Benetzungseinrichtung 16 zugeordnet, die ebenfalls über dem Rechner 15 gesteuert wird.

Der Rechner erkennt das Vorhandensein eines Rotte-Behälters 5 in der Kompostierungsposition 7 und stellt durch ständig angepasste Prozesskühlung auf Grund der Regelung der Belüftungsintensität und durch gezieltes Nachfeuchten des Rottegutes den Prozessablauf zu jeder Zeit optimal ein. Dies kann auch unter Berücksichtigung der Einhaltung von Grenzwerten der Eingangsparameter von Biofiltern 17, 18 erfolgen. Letztere reduzieren die Geruchsbelastung auf ein unmerkliches Maß, wenn die Anlage ordnungsgemäß betreiben wird. Dies garantiert der Systemaufbau zusammen mit der Regelung. Die Prozessrohluft kann aus der Klimaanlage 10 auch über Leitungen den Rotte-Behältern 5 zugeführt werden. Insbesondere können weitere Rotte-Behälter auf diese Weise auch außerhalb der Halle 1 aufgestellt werden. Die erwähnte Wärmepumpe kann auch so betrieben werden, dass sie zur Kühlung der Prozessrohluft verwendet wird. Eine Wärmeabfuhr erfolgt dann über die Prozessabluft oder über ein Kühlsystem.

## Patentansprüche

1. Kompostierungssystem mit offenen oder geschlossenen Rotte-Lagerpositionen, wie beispielsweise Rotte-Behältern (5), mit Messstellen (14) für Temperatur, Feuchte, Partialdruck und Mengen von Luft im Abluftbereich, einer Belüftungs- und Absaugeinrichtung sowie mit einer Regelung des Prozessablaufes auf Grund von Messgrößen, **dadurch gekennzeichnet, dass** das Rottegut in den Lagerpositionen bzw. Behältern (5) mit konditionierter Prozessrohluft als Zuluft beaufschlagt ist, deren Temperatur einstellbar ist, dass zusätzlich zu den Messstellen (14) im Abluftbereich auch im Zuluftbereich Messstellen (13) angeordnet und diese Messstellen zur Ermittlung des Wärmestromes sowohl im Zuluft- als auch im Abluftbereich für die Messung von Temperatur, Feuchte, Druck, allenfalls Partialdruck, und zumindest an einer Messstelle für die Menge der die Lagerposition bzw. den Behälter (5) durchsetzenden Luft ausgelegt und an einen Rechner (15) eines von der im aeroben Abbauprozess (Rotte) freigesetzten Reaktionswärme geführten Prozessreglers (15) angeschlossen sind, der die Wärmetönung der Rotte während des Prozessablaufs pro Zeiteinheit aus den Wärmeströmen im Zuluft- und Abluftbereich ermittelt und abhängig von einer festgestellten Zunahme oder Abnahme der Wärmetönung daraus unter Einhaltung einer dem aktuellen Prozessstadium jeweils vorzugebenden Temperatur sowie Wasserdampfsättigung bei vorgegebenen Druckverhältnissen die Saugleistung im Abluftbereich einer jeden Lagerposition bzw. Behälters (5) steuert und zur Einhaltung einer vorgegebenen Substratfeuchte eine Nachfeuchtung des Rottegutes für jede Lageposition bzw. Behälter (5) ermittelt.

2. Kompostierungssystem nach Anspruch 1, **dadurch gekennzeichnet, dass** zusätzlich zur Temperatur auch die Feuchte, der Partialdruck und die Menge der Prozess-Rohluft einstellbar sind.

3. Kompostierungssystem nach Anspruch 1 oder 2, **dadurch gekennzeichnet, dass** die Saugleistung im Abluftbereich einer jeden Lagerposition bzw. Behälters (5) durch intermittierendes Öffnen und Schließen einer jeweils zugeordneten Luftklappe (12) gesteuert wird.

4. Kompostierungssystem nach einem der Ansprüche 1 bis 3, **dadurch gekennzeichnet, dass** die Prozessregelung (15) zur Sicherstellung vollständiger aerober Abbauvorgänge und zur Minimierung der Abluftbelastung die Ausgangsgrößen der Abluft, nämlich Feuchte und Temperatur, an die Nennwerte der Betriebsgrößen nachgeschalteter Filter, insbesondere Biofilter (17, 18), anpasst.

5. Kompostierungssystem nach einem der Ansprüche 1 bis 4, **dadurch gekennzeichnet, dass** ein Luftbefeuchter in einer Klimaanlage (10) zur Erhöhung der Luftfeuchte der Prozessrohluft im Zuluftbereich des Rottegutes bzw. der Rottebehälter (5), unabhängig von einer allfälligen Befeuchtungseinrichtung (16) des Rottegutes selbst, vorgesehen ist.

6. Kompostierungssystem nach einem der Ansprüche 1 bis 5, **dadurch gekennzeichnet, dass** zur Befeuchtung des Rottegutes selbst im Bereich der Rotte-Lagerpositionen, insbesondere in den Rotte-Behältern (5), über dem Rottegut Benetzungseinrichtungen (16), wie etwa Berieselungsanlagen, vorgesehen sind, deren Steuerventile an die Prozessregelung (15) angeschlossen sind.

7. Kompostierungssystem nach Anspruch 6, **dadurch gekennzeichnet, dass** die als Rotte-Lagerpositionen vorgesehenen, insbesondere zum Be- und Entladen ortsveränderlichen Rotte-Behälter (5) in einem die Prozessrohluft enthaltenden klimatisierten Raum, z.B. einer Halle (1), mit regelbarer Lufttemperatur, Luftfeuchte und Luftdruck vorgesehen sind und die Rotte-Behälter (5), gegebenenfalls lösbar, an die Absaugeinrichtung angeschlossen sind, wobei der Rechner (15) den Luftdurchsatz jedes Rotte-Behälters (5) individuell und dem Prozessverlauf im angeschlossenen Rotte-Behälter (5) folgend, steuert und dass die Benetzungseinrichtungen (16) zur Nachfeuchtung der Rotte individuell zuschaltbar sind.

8. Kompostierungssystem nach einem der Ansprüche 1 bis 7, **dadurch gekennzeichnet, dass** bei geschlossenen Rotte-Behältern (5) die Durchsatzrichtung bzw. Durchströmungsrichtung der Prozessluft durch den Rottekörper umkehrbar ist.

9. Kompostierungssystem nach einem der Ansprüche 1 bis 8, **dadurch gekennzeichnet, dass** die Absaugeinrichtung ein zentrales Gebläse (4), gegebenenfalls ein Drehkolbengebläse mit Absaugleitungen (2) umfasst, die im klimatisierten Raum in den Reaktionspositionen bzw. Kompostierungspositionen (7) der Rotte-Behälter (5) zum Anschluss an diese enden.

10. Kompostierungssystem nach den Ansprüchen 1 bis 9, **dadurch gekennzeichnet, dass** in den Absaugleitungen (2), insbesondere in der aus allen Rottechargen zusammengeführten Leitung, Wärmetauscher (9, 11) zur Abgabe der Prozesswärme, vorzugsweise an eine Wärmepumpe, vorgesehen sind.

11. Kompostierungssystem nach einem der Ansprüche 1 bis 10, **dadurch gekennzeichnet, dass** in der Prozessabluftleitung ein Anschluss zur Einspeisung von Frischluft vorgesehen ist.

12. Kompostierungssystem nach einem der Ansprüche 1 bis 11, **dadurch gekennzeichnet, dass** die Klimaanlage (10) der Prozessrohluft für den Rotteprozess einen Wäscher für Frischluft zu deren Zustandsänderung, z.B. Abkühlung und Sättigung und sodann eine Heizeinrichtung zur allfälligen Erwärmung der feuchten Luft, insbesondere durch den Kondensator einer von den Abluft-Saugleitungen beaufschlagten Wärmepumpe umfasst.

13. Kompostierungssystem nach Anspruch 12, **dadurch gekennzeichnet, dass** die Wärmepumpe im Umkehrbetrieb zur Kühlung der Prozessrohluft und zur Abgabe der Überschusswärme an die Prozessabluft angeschlossen ist.

14. Kompostierungssystem nach einem der Ansprüche 1 bis 12, **dadurch gekennzeichnet, dass** ein zentraler Abluftwäscher, insbesondere bei Kühlung der Prozessabluft durch Frischluft, in der Saugleitung bzw. nach einem als Absaugeinrichtung dienenden Sauggebläse (4) vorgesehen ist.

## Claims

1. Composting system with open or closed storage positions, such as for example containers (5), for rotting material; measurement points (14) for air temperature, humidity, partial pressure and quantities of air in the exhaust-air sector; an aeration and extraction system; and process control based on measured parameters; **characterized in that** the rotting material in the storage positions or containers (5) is treated with conditioned raw process air as supply air whose temperature is adjustable, **in that** in addition to the measurement points (14) in the exhaust-air region, measurement points (13) are also arranged in the supply-air region, and, for the purpose of determining the heat flow in the supply-air region as well as in the exhaust-air region, these measurement points are designed for the measurement of temperature, humidity, pressure, if need be partial pressure, and, at at least one measurement point, air flow through the storage position or container (5), and are connected to a computer (15) of a process regulator (15) which is governed by the heat of reaction released in the aerobic decomposition (rotting) process and which determines the heat generated per unit of time of the material during the process cycle from the heat flows in the supply-air and exhaust-air regions and, as a function of a detected increase or decrease in the heat generated, controls the extraction power in the exhaust-air region of each storage position or container (5) while maintaining a temperature or water vapour saturation under specified pressure conditions appropriate to the current stage of the process, and computes for each storage position or container (5) a re-dampening of the rotting material needed to maintain a specified substrate moisture.

2. Composting system according to Claim 1, **characterized in that** the humidity, partial pressure and flow of the raw process air are adjustable, in addition to its temperature.

3. Composting system according to Claim 1 or Claim 2, **characterized in that** the extraction power in the exhaust-air region of each storage position or container (5) is controlled by intermittently opening and shutting a respective associated air valve (12).

4. Composting system according to any one of Claims 1 to 3, **characterized in that** in order to ensure complete aerobic decomposition processes and minimize pollution of the exhaust air, the process control (15) adapts the output variables of the exhaust air, namely humidity and temperature, to the nominal values of the operating parameters of downstream filters, particularly biofilters (17, 18).

5. Composting system according to any one of Claims 1 to 4, **characterized in that** a humidifier is provided in an air-conditioning plant (10) to increase the humidity of the raw process air in the supply-air region of the rotting material or containers (5) independently of any dampening system (16) for the rotting material itself.

6. Composting system according to any one of Claims 1 to 5, **characterized in that** wetting devices (16) such as sprinkler systems whose control valves are connected to the process control (15) are provided over the rotting material to dampen the rotting material itself in the region of the material storage positions, in particular in the containers (5).

7. Composting system according to Claim 6, **characterized in that** the containers (5) provided as storage positions for the rotting material (which are in particular movable for loading and unloading purposes) are provided with controllable air temperature, air humidity and air pressure inside an air-conditioned space containing the raw process air, e.g. a hangar (1), and the containers (5) are, optionally releasably, connected to the extraction system, the computer (15) controlling the throughput of air in each container (5) individually and in step with the process in the connected container (5), and **in that** the wetting devices (16) for re-dampening the rotting material are individually activatable.

8. Composting system according to any one of Claims 1 to 7, **characterized in that** in the case of closed rotting material containers (5) the direction of permeation or flow of process air through the rotting mass is reversible.

9. Composting system according to any one of Claims 1 to 8, **characterized in that** the extraction system comprises a central blower (4), optionally a rotary piston blower, with extraction lines (2) terminating in the air-conditioned space at the reaction positions or composting positions (7) of the material containers (5) for connection to the latter.

10. Composting system according to Claims 1 to 9, **characterized in that** heat exchangers (9, 11) are provided in the extraction lines (2), particularly in the common line from all rotting batches, to surrender the process heat, preferably to a heat pump.

11. Composting system according to any one of Claims 1 to 10, **characterized in that** a connection for infeed of fresh air is provided in the process exhaust-air line.

12. Composting system according to any one of Claims 1 to 11, **characterized in that** the air-conditioning plant (10) for the raw process air for the rotting process comprises a washer for fresh air to modify its condition e.g. by cooling and saturation, followed by a heating unit for warming the moist air if required, particularly by means of the condenser of a heat pump coupled to the exhaust-air extraction lines.

13. Composting system according to Claim 12, **characterized in that** the heat pump is connected in reverse mode to cool the raw process air and surrender the excess heat to the process exhaust air.

14. Composting system according to any one of Claims 1 to 12, **characterized in that** a central exhaust-air washer, especially with cooling of the process exhaust air by fresh air, is provided in the extraction line or after a suction fan (4) serving as extractor.

## Revendications

1. Système de compostage comprenant des positions de stockage de tourbes en digestion ou produits à composter, ouvertes ou fermées, tel que par exemple des récipients à tourbe (5), des emplacements de mesure (14) pour la température, l'humidité, la pression partielle et les quantités d'air dans la zone d'évacuation d'air, un dispositif d'aération et d'évacuation par aspiration, ainsi qu'une régulation du déroulement du processus, basée sur des grandeurs de mesure, **caractérisé en ce que** le produit en digestion à composter, situé aux positions de stockage et/ou dans les récipients (5), est sollicité par de l'air brut de processus, ayant été conditionné, en tant qu'air d'alimentation, dont la température est réglable, **en ce que**, en plus des emplacements de mesure (14), dans la zone d'air d'évacuation sont également disposés dans la zone d'air d'alimentation des emplacements de mesure (13), et ces emplacements de mesure sont conçus pour permettre la détermination du flux thermique, tant dans la zone d'alimentation d'air qu'également dans la zone d'évacuation d'air pour la mesure de la température de l'humidité, de la pression, en tout cas de la pression partielle, et au moins en un emplacement de mesure de la quantité d'air traversant la position de stockage ou le récipient (4), et sont raccordés à un ordinateur ou calculateur (15) d'un régulateur de processus (15), guidé par la chaleur de réaction dégagée par le processus de décomposition aérobie (digestion), le régulateur de processus déterminant la tonalité thermique de la tourbe en digestion pendant le déroulement du processus, par unité de temps, d'après les flux d'air dans la zone d'air d'alimentation et d'air d'évacuation; et, en fonction d'une augmentation ou d'une diminution constatée de la tonalité thermique, à partir de cela, en respectant une température chaque fois à préférer au stade de processus actuel, ainsi qu'en respectant la saturation en vapeur d'eau pour des conditions de pression prédéterminées, commande la puissance d'aspiration dans la zone d'air d'évacuation de chaque position de stockage ou récipient (5) et, pour assurer le respect d'une humidité de substrat prédéterminée, détermine une réhumidification du produit en digestion pour chaque position de stockage ou récipient (5).

2. Système de compostage selon la revendication 1, **caractérisé en ce que**, en plus de la température, l'humidité, la pression partielle et la quantité d'air brut de processus sont également réglables.

3. Système de compostage selon la revendication 1 ou 2, **caractérisé en ce que** la puissance d'aspiration dans la zone d'air d'évacuation, de chaque position de stockage ou de récipient (5), est commandée par ouverture et fermeture intermittentes d'un volet d'air (12) chaque fois associé.

4. Système de compostage selon l'une des revendications 1 à 3, **caractérisé en ce que** la régulation de processus (15), pour assurer des processus de décomposition aérobie complets et pour minimiser la pollution par l'air d'évacuation, adapte les caractéristiques de sortie de l'air d'évacuation, précisément l'humidité et la température, aux valeurs nominales des grandeurs caractéristiques de fonctionnement des filtres installés en aval, en particulier des bio-filtres (17,18).

5. Système de compostage selon l'une des revendications 1 à 4, **caractérisé en ce qu'**un humidificateur d'air est prévu dans une installation de climatisation (10), pour augmenter l'humidité de l'air brut de processus dans la zone d'air d'alimentation du produit en digestion et/ou du récipient de digestion (5), indépendamment d'un dispositif d'humidification (16) éventuel du produit en digestion lui-même.

6. Système de compostage selon l'une des revendications 1 à 5, **caractérisé en ce que**, pour assurer l'humidification du produit en digestion lui-même, dans la zone des positions de stockage de tourbe en digestion, en particulier dans les récipients de digestion ou de compostage (5), sont prévus, au-dessus du produit en digestion, des dispositifs de mouillage (16), tels que, par exemple, des installations d'arrosage, dont des valves de commande sont reliées à la régulation de processus (15).

7. Système de compostage selon la revendication 6, **caractérisé en ce que** les récipients de digestion (5) prévus en tant que positions de stockage de tourbe en digestion, en particulier les récipients dont la position géographique est modifiable pour effectuer le chargement et le déchargement, sont prévus dans un espace climatisé contenant l'air brut de processus, par exemple dans un hall (1) avec une température d'air, une humidité de l'air et une pression d'air réglables, et **en ce que** les récipients de digestion (5) sont reliés, le cas échéant de façon désolidarisable, au dispositif d'aspiration, sachant que l'ordinateur (15) commande le débit d'air de chaque récipient de digestion (5), individuellement et en suivant l'allure du processus dans le récipient de digestion (5) relié, et **en ce que** les dispositifs de mouillage (16) sont susceptibles d'être branchés individuellement, pour effectuer le réhumidification de la tourbe en digestion.

8. Système de compostage selon l'une des revendications 1 à 7, **caractérisé en ce que**, dans le cas de récipients de digestion (5) fermés, le sens de passage ou le sens d'écoulement de l'air de processus à travers le corps en digestion est réversible.

9. Système de compostage selon l'une des revendications 1 à 8, **caractérisé en ce que** le dispositif d'aspiration comprend une soufflante (4) centrale, le cas échéant une soufflante à piston rotatif avec des conduites d'aspiration (2), qui, dans un local climatisé, s'achèvent aux positions de réaction ou aux positions de compostage (7) des récipients de digestion (5), pour se relier à ceux-ci.

10. Système de compostage selon l'une des revendications 1 à 9, **caractérisé en ce que**, dans les conduites d'aspiration (2), en particulier dans la conduite reliée à toutes les charges en digestion, sont prévus des échangeurs de chaleur (9,11) pour la dissipation de la chaleur de processus, de préférence par fourniture à une pompe à chaleur.

11. Système de compostage selon l'une des revendications 1 à 10, **caractérisé en ce que**, dans la conduite d'air d'évacuation de processus, est prévu un raccord pour l'injection d'air frais.

12. Système de compostage selon l'une des revendications 1 à 11, **caractérisé en ce que** l'installation de climatisation (10) de l'air brut de processus pour le processus de digestion comprend un laveur pour l'air frais, pour produire sa modification d'état, par exemple son refroidissement et sa saturation, puis un dispositif de chauffage pour le chauffage éventuel de l'air humide, en particulier par le condenseur d'une pompe à chaleur sollicitée par les conduites d'aspiration d'air d'évacuation.

13. Système de compostage selon la revendication 12, **caractérisé en ce que** la pompe à chaleur est reliée en fonctionnement inversé, pour refroidir l'air brut de processus et pour effectuer la dissipation de l'excès de chaleur à l'air d'évacuation de processus.

14. Système de compostage selon l'une des revendications 1 à 12, **caractérisé en ce qu'**un laveur d'air d'évacuation central, en particulier dans le cas du refroidissement de l'air d'évacuation de processus par de l'air neuf, est prévu dans la conduite d'aspiration, ou en aval d'une soufflante d'aspiration (4) servant de dispositif d'aspiration.
